# EUROPEAN PATENT APPLICATION

(11) **EP 2 546 113 A2**
(43) Date of publication of application: **16.01.2013**
(21) Application number: 11753651.6
(22) Date of filing: 11.03.2011
(51) Int. Cl.: B60R 22/04, B60R 22/24

(54) **APPARATUS FOR AUTOMATICALLY LOCKING AND UNLOCKING A VEHICLE SEAT BELT**

(30) Priority: 15.07.2010 KR 20100068523; 11.03.2010 KR 20100022000
(71) Applicant: MBI Co., Ltd., Chungcheongbuk-do 361-270 (KR)
(72) Inventor: YU, Hyouk, Chungbuk 361-270 (KR); JUNG, Tae-jin, Chungbuk 361-270 (KR); AN, Seong-cheol, Chungbuk 361-270 (KR); LEE, Chang-min, Chungbuk 361-270 (KR)
(74) Representative: Gille Hrabal
(86) International application number: PCT/KR2011/001732
(87) International publication number: WO 2011/112047

(57) **Abstract**

The present invention relates to an apparatus for automatically locking and unlocking a vehicle seat belt, which automatically locks and unlocks seat belts of a driver seat and a passenger seat of a vehicle. The apparatus includes: a first housing 10; a second housing 20; a belt-locking bar 40 having one end coupled to a hinge portion 30 provided at the center of a connection portion between the first and second housings 10 and 20; a movable block 61; a retractor 50; a chest protecting belt 60 having one end connected to the movable block 61; an abdomen protecting belt 70; and a controller 100 for controlling the rotation of the belt-locking bar 40. According to the present invention, the seat belt is automatically locked at the time of a start of a vehicle engine without being manually worn by a driver or a passenger getting in the vehicle.

## Description

### BACKGROUND OF THE INVENTION

### 1. Technical Field

The present invention relates to an apparatus for automatically locking and unlocking a vehicle seat belt, and more particularly, to an apparatus for automatically locking and unlocking a vehicle seat belt, which automatically locks a seat belt when a vehicle engine starts after a passenger gets in a vehicle and automatically unlocks the seat belt when the vehicle engine stalls or when the passenger separately unlocks the seat belt.

### 2. Description of the Related Art

When an accident such as sudden braking, collision, rollover of a vehicle, or the like, occurs while driving the vehicle, a driver or a passenger sitting on a passenger seat collides with a vehicle body or is separated from the seat due to inertia, such that he/she is significantly injured.

A seat belt is generally installed in the vehicle so that positions of the passenger may be maintained as they are even in the case in which the vehicle suddenly stops or rolls over.

A seat belt according to the related art has a structure in which a seat belt having a locker is installed at a vehicle door side and a buckle to which the locker of the seat belt is coupled is installed at one side surface of a seat. When a passenger uses the above-mentioned seat belt, he/she sits on the seat, pulls the seat belt to allow the seat belt to diagonally cross his/her body, and then couples the locker to the buckle, thereby elastically fixing the body of the passenger to the seat.

Meanwhile, the government makes wearing of the seat belt mandatory for safety reasons. However, the case in which the passenger does not wear the seat belt for reasons such as oblivion, a short driving distance, or the like, has been often generated.

As one method for encouraging the wearing of the seat belt in the case in which the passenger does not wear the seat belt due to the oblivion, an apparatus for warning the wearing of a seat belt disclosed in Korean Utility Model Laid-Open Publication No. 1998-031305 (entitled "Apparatus for Warning Wearing of Vehicle Seat Belt) has been suggested.

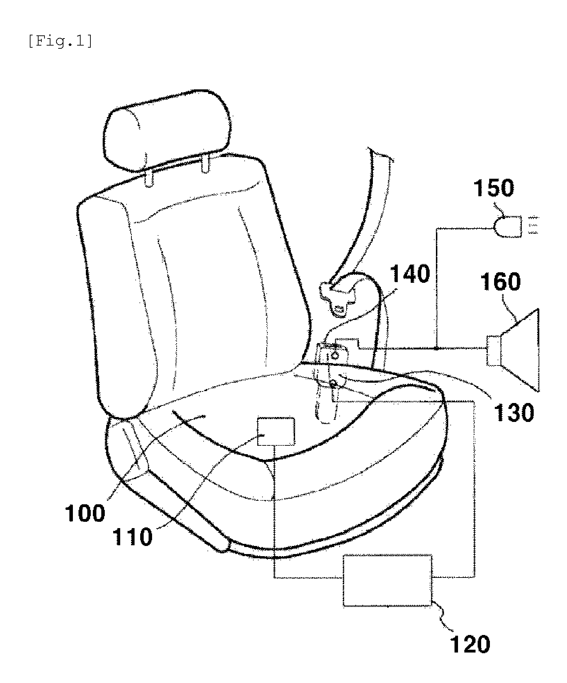

The apparatus for warning wearing of a vehicle seat belt disclosed in Korean Utility Model Laid-Open No. 1998-031305 is configured to include a pressure sensor 110 mounted in a seat cushion 100 of a vehicle to confirm the presence and absence of a passenger, a controller 120 receiving a signal of the pressure sensor 110 and performing a calculation, a contact switch 140 provided at a buckle 130 so as to turn on/off power applied from the controller 120, and a warning lamp 150 and a warning speaker 160 that warn the passenger whether or not he/her wears a seat belt, as shown in FIG. 1.

The apparatus for warning wearing of a vehicle seat belt disclosed in Korean Utility Model Laid-Open Publication No. 1998-031305 generates a warning sound or turns on a lamp according to non-wearing of the seat belt for a predetermined time when a driver starts a vehicle engine without wearing the seat belt, thereby warning the passenger. However, since the driver may drive the vehicle even in a state in which he/her does not wear the seat belt, an object such as forced wearing of the seat belt may not be accomplished. Further, since a warning target is limited to the driver, attention is not paid to whether or not a passenger sitting on a passenger seat wears the seat belt.

### SUMMARY OF THE INVENTION

An object of the present invention is to provide an apparatus for automatically locking and unlocking a vehicle seat belt capable of significantly reducing an injury to a person due to non-wearing of the seat belt by automatically locking a seat belt when a vehicle engine starts after a passenger gets in a vehicle to increase a wearing rate of the seat belt.

Another object of the present invention is to provide an apparatus for automatically locking and unlocking a vehicle seat belt capable of allowing a passenger to recognize locking of the seat belt by warning the passenger of the locking of the seat belt in advance when the seat belt is automatically locked and capable of protecting the passenger by performing a control so as to temporarily stop an operation of the seat belt or automatically return the seat belt when an actuator of the seat belt contacts a portion of a body of the passenger at an abnormal position during a process of locking the seat belt.

According to an exemplary embodiment of the present invention, there is provided an apparatus for automatically locking and unlocking a vehicle seat belt, the apparatus including: a first housing provided at an upper portion of a door; a second housing provided at a side portion of the door; a belt-locking bar having one end coupled to a hinge portion provided at the center of a connection portion between the first and second housings, such that it rotates between the first and second housings and including a guide rail portion formed in a lengthwise direction; a movable block slidably coupled to the guide rail portion; a retractor installed at a side surface of a seat; a chest protecting belt having one end connected to the movable block and the other end connected to the retractor so as to be wound by the retractor; an abdomen protecting belt having one end connected to the belt-locking bar and the other end connected to the retractor so as to be wound by the retractor; and a controller for controlling the rotation of the belt-locking bar.

### BRIEF DESCRIPTION OF THE DRAWINGS

FIG. 1 is a perspective view showing an example of an apparatus for warning the wearing of a vehicle seat belt according to the related art;
FIG. 2 is a perspective view showing an example of an apparatus for automatically locking and unlocking a vehicle seat belt according to an exemplary embodiment of the present invention;
FIG. 3 is a front view showing an example of first and second housings according to the exemplary embodiment of the present invention;
FIG. 4 is a cross-sectional view showing an example of a locking member according to the exemplary embodiment of the present invention;
FIG. 5 is a front view showing an example of a belt locking bar according to the exemplary embodiment of the present invention;
FIG. 6 is a state diagram showing an example of an operation of the belt locking bar according to the exemplary embodiment of the present invention;
FIG. 7 is a cross-sectional view taken along the line A-A of FIG. 6 and a perspective view showing an example of a driving motor and a semicircular toothed gear; and
FIG. 8 is a perspective view showing an example of a movable block according to the exemplary embodiment of the present invention.

### DESCRIPTION OF THE PREFERRED EMBODIMENTS

Hereinafter, exemplary embodiments of the present invention will be described in more detail with reference to the accompanying drawings.

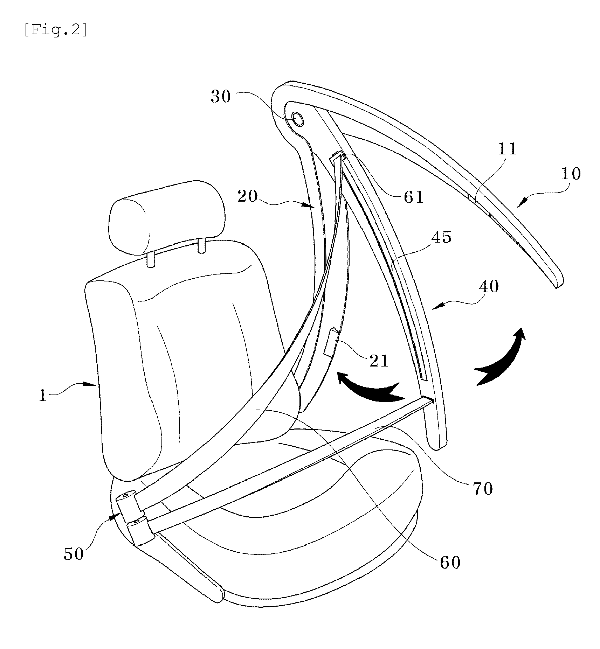

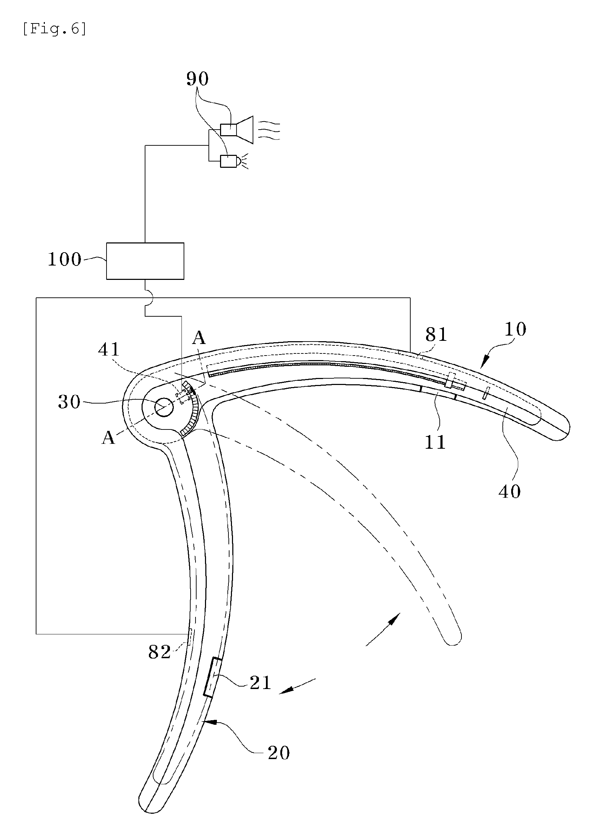

An apparatus for automatically locking and unlocking a vehicle seat belt according to an exemplary embodiment of the present invention is installed at an upper portion region and a side surface region of a position at which a door is installed in a side surface frame of a vehicle to automatically lock or unlock a seat belt. To this end, the apparatus for automatically locking and unlocking a vehicle seat belt according to the exemplary embodiment of the present invention is mainly configured to include a first housing 10, a second housing 20, a belt-locking bar 40, a retractor 50, a chest protecting belt 60, an abdomen protecting belt 70, and a controller 100, as shown in FIGS. 2 and 6.

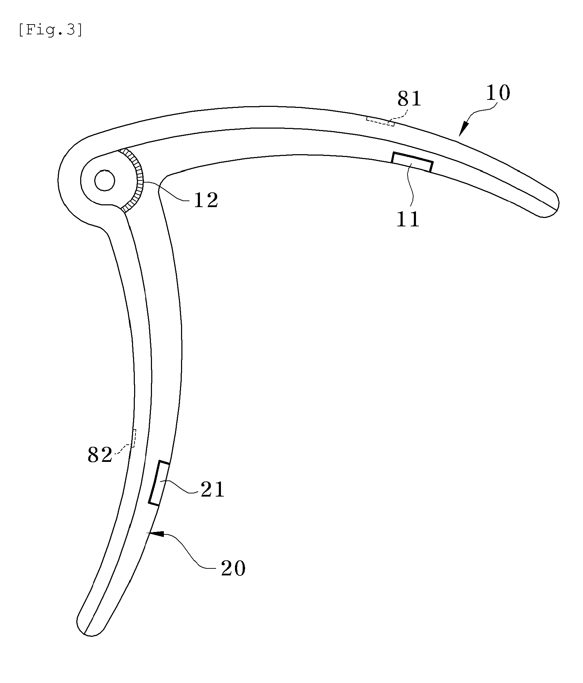

Each of the first and second housings 10 and 20 is a seat portion installed at the upper portion region and the side surface region of the position at which the door is installed in the side surface frame of the vehicle and having a belt-locking bar 40 to described below rotating to thereby be received therein. As shown in FIG. 3, the first and second housings 10 and 20 are installed with sensors 81 and 82 for sensing a position of the belt-locking bar 40 and locking members 11 and 21, respectively, and a hinge portion 30 is installed at the center at which one distal ends of the first and second housings 10 and 20 contact each other.

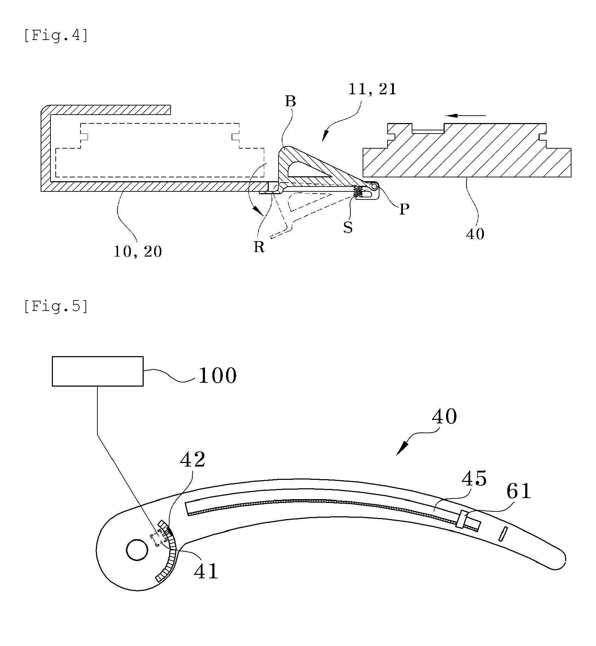

Here, the first and second housings 10 and 20 have a "⊏" shaped cross section so as to enclose a belt-locking bar 40 to be described below, as shown in FIG. 4.

In addition, the locking members 11 and 21 include buttons B formed in an inclined shape as shown in FIG. 4 and having one end fixed by the hinges P, springs S are installed between the buttons B and the first and second housings 10 and 20 so that positions of the hinges P are restored by elastic force when the buttons B rotate around the hinges P, and ascending prevention jaws R are protrudedly formed at free ends of the buttons B so as to prevent separation of the buttons B due to the rotation by the elastic force of the springs S.

In addition, the locking members 11 and 21 may be automatically opened by a controller 100 to be described below. To this end, a rear surface of each of the buttons B of the locking members 11 and 21 is installed with an electromagnet (not shown) and power is supplied to the electromagnet or the supply of the power to the electromagnet is blocked to allow the button B to be attached to or detached from the electromagnet, thereby making it possible to lock or unlock the belt-locking bar 40.

In this case, as the belt-locking bar 40 rotates along an inclined surface of the button B, the belt-locking bar 40 naturally passes through the button B while temporarily pressing the button B. When the belt-locking bar 40 passes through the button B and is then received in the first or second housing 10 or 20, the belt-locking bar 40 is locked by the button B.

In order to unlock the belt-locking bar, the controller 100 supplies the power to the electromagnet to allow the button B to be attached to the electromagnet, such that the button B descends. As a result, the button B that has locked the belt-locking bar 40 is unlocked, such that the belt-locking bar 40 is unlocked.

Both of the operations of locking and unlocking the belt-locking bar 40 by the button B may also be performed by supplying the power to the electromagnet and blocking the supply of the power to the electromagnet in the controller 100 so as to be easily implemented by those skilled in the art.

In addition, one distal end of the belt-locking bar 40 having a structure as shown in FIG. 5 is rotatably coupled to the hinge portion 30 installed at the center at which one distal ends of the first and second housings 10 and 20 contact each other.

The belt-locking bar 40, which is a device having one distal ends of chest and abdomen protecting belts 60 and 70 to be described below connected thereto and rotating in order to allow the passenger to wear or unlock the seat belt, is installed to rotate by the hinge portion 30 at the center at which one distal ends of the first and second housings 10 and 20 contact each other and includes a guide rail portion 45 formed in a lengthwise direction thereof, as shown in FIG. 5.

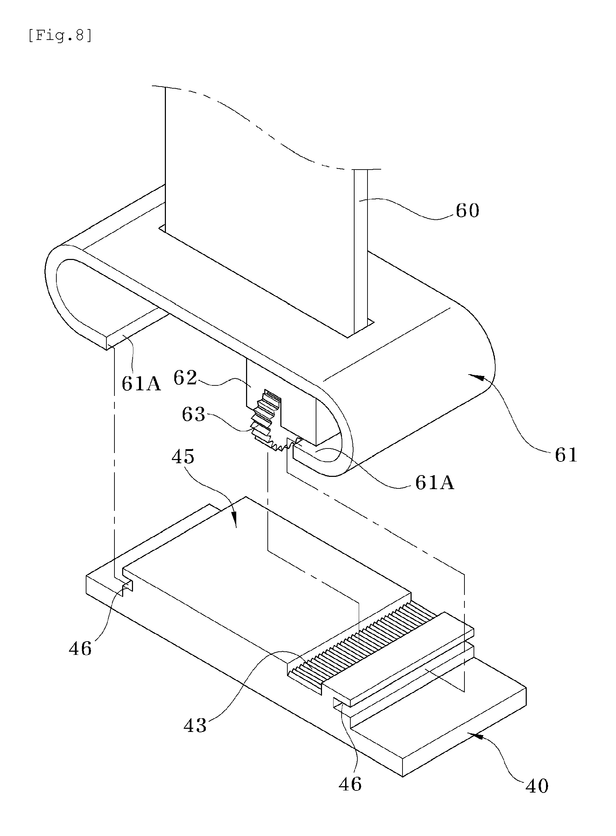

As shown in FIG. 8, the guide rail portion 45 may include a long groove or a step formed along the belt-locking bar 40, and the movable block 61 to which the chest protecting belt 60 may be coupled to the guide rail portion 45 to thereby be slid.

Further, as shown in FIG. 6, the belt-locking bar 40 is coupled to the first or second housing 10 or 20 through the hinge portion 30 to rotate between the first and second housings 10 and 20. Here, in the case in which the belt-locking bar 40 is moved to the first housing 10, the seat belt becomes an unlocked state, and in the case in which the belt-locking bar 40 is moved to the second housing 20, the seat belt becomes a worn state.

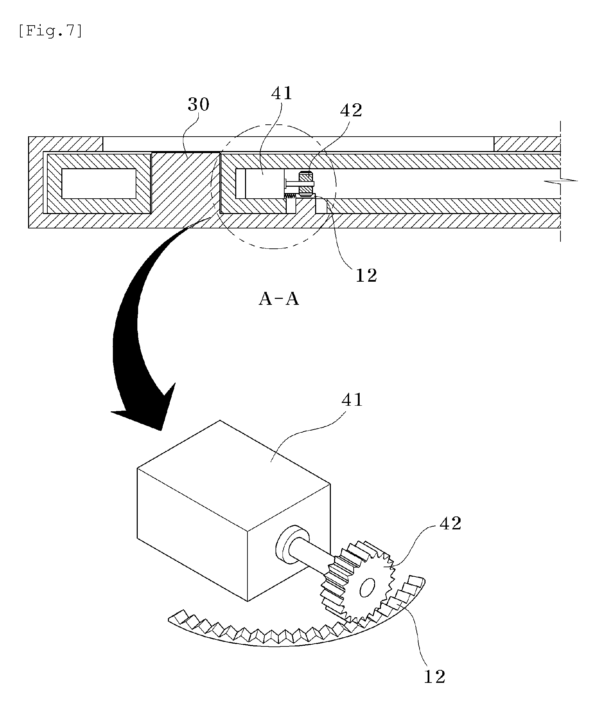

In order to rotate the belt-locking bar 40 as described above, the first and second housings 10 and 20 are provided with a semicircular toothed gear 12 disposed to be adjacent to the hinge portion 30, and a driving motor 41 including a pinion gear 42 engaged with the semicircular toothed gear 12 is installed to the belt-locking bar 40 side, as shown in FIG. 7.

Here, in order to judge whether or not the belt-locking bar 40 is locked and whether or not the driving motor 41 stops, the first and second housings 10 and 20 are provided with the sensors 81 and 82, as shown in FIGS. 3 and 6.

The retractor 50 is a device installed at a side surface space of a seat 1, having one distal ends of the chest and abdomen protecting belts 60 and 70 connected thereto, and allowing an elastic member such as a spring installed therein to automatically wind the belts therearound to adjust tension so that the belts always become a tight state, as shown in FIG. 2.

Two retractors 50 are separately installed so that the chest and abdomen protecting belts 60 and 70 may be wound therearound, respectively, and are installed with the chest and abdomen protecting belts 60 and 70, respectively.

Since the retractor 50 as described above has generally been widely used in a vehicle seat belt technology, a description of a detailed configuration of the retractor 50 will be omitted.

The chest and abdomen protecting belts 60 and 70 are belts locking chest and abdomen of the passenger while the crossing chest and the abdomen of the passenger by the descent of the belt-locking bar 40. One distal end of the chest protecting belt 60 is installed at the guide rail portion 45 by the movable block 61 and the other distal end thereof is fixed by the retractor 50.

In addition, one distal end of the abdomen protecting belt 70 is connected to the belt-locking bar 40 and the other distal end thereof is fixed by the retractor 50.

The movable block 61, which is a component installed at the guide rail portion 45 of the belt-locking bar 40 and slid, is slid along the guide rail portion 45 at the time of the ascent and descent of the belt-locking bar 40 to pull and lock or unlock the chest protecting belt 60, such that the belt is aligned simultaneously with being locked or unlocked, thereby securing a space at the time of getting in/off the vehicle.

Further, the abdomen protecting belt 70 is installed at a lower end of the belt-locking bar 40, and free ends of the chest and abdomen protecting belts 60 and 70 are wound around the retractor 50, such that the belt is maintained to be elastically tight.

Describing the movable block 61 in more detail, the guide rail portion 45 provided at the belt-locking bar 40 is provided with a toothed gear portion 43 in the lengthwise direction, and a driving toothed wheel 63 engaged with the toothed gear portion 43 is provided at a lower surface of the movable block 61 provided at one end of the chest protecting belt 60 and is driven by a servomotor 62 to control the sliding of the movable block 61, as shown in FIG. 8.

The movable block 61 may be naturally slid by the ascent and descent of the belt-locking bar 40 so as to be easily implemented by those skilled in the art. However, more preferably, a transfer of the movable block 61 may be precisely controlled by transferring the driving toothed wheel 63 in a state in which the driving toothed wheel 63 is engaged with the toothed gear portion 43 through driving of the servomotor 62.

Here, the movable block 61 and the guide rail portion 45 include coupling portions so as to be slidably coupled to each other. The coupling portions may be implemented by, for example, mounting protrusions 61A formed at both sides of a lower end of the movable block 61 and insertion grooves 46 formed in the guide rail portion 45 and having the mounting protrusions 61A fixed thereto, as shown in FIG. 8.

The sensors 81 and 82, which are to sense a state in which the belt-locking bar 40 is received in the first or second housing 10 or 20 when the belt-locking bar 40 rotates toward one of the first and second housings 10 and 20 as described above, sense a state in which the belt-locking bar 40 is moved closely to the first or second housings 10 or 20 to judge whether or not a locking operation is made, thereby controlling an operation of the driving motor 41, as shown in FIGS. 3 and 6.

A recognizing device 90 is a device allowing the passenger to recognize an operation state in which the belt is locked or unlocked according to the rotation of the belt-locking bar 40. The recognizing device 90 outputs a signal using a light emitting diode (LED) lamp or outputs a beep sound or a warning sound using a speaker according to a position of the belt-locking bar 40 under a control of the controller 100 receiving signals of the sensors 81 and 82 to control the driving motor 41 and is implemented so that the passenger may directly recognize the output signal or sound.

As described above, the apparatus for automatically locking and unlocking a vehicle seat belt according to the exemplary embodiment of the present invention includes the recognizing device 90 as described above, thereby making it possible to prevent the seat belt from being uncertainly locked or unlocked or malfunctioning due to movement of the passenger at the time of an operation of the belt-locking bar 40.

The controller 100, which is a device controlling operations of the above-mentioned components, senses whether the passenger gets in or off the vehicle, whether the seat belt is locked or unlocked, and a sudden malfunction situation to return or fix a position of the belt-locking bar 40 or operates the recognizing device 90 so that the user may easily recognize an operation state.

Particularly, a safe control operation of immediately sensing a load when the load is generated in the driving motor 41 due to collision between the belt-locking bar 40 and a body of the passenger, or the like, during the rotation of the belt-locking bar 40 to return the belt-locking bar 40 to a position thereof before being operated is performed by the controller 100.

According to the exemplary embodiment of the present invention configured as described above, when the belt-locking bar 40 rotates between the first and second housings 10 and 20, it is moved while getting on the inclined surface of the button B each provided at the locking members 11 and 21 to naturally press the button B, and after the belt-locking bar 40 passes through the button B, the button B ascends by the elastic force of the spring S, such that the belt-locking bar 40 is fixed so as not to be easily separated in a reverse direction, as shown in FIG. 4.

In the case in which the belt-locking bar 40 is locked by the locking members 11 and 21 as described above, even though large force is applied to the seat belt when the belt-locking bar 40 positioned in the first housing 10 arbitrarily descends by its weight or the vehicle suddenly stops in a state in which the seat belt is worn, the belt-locking bar 40 does not rotate, but is firmly fixed, such that a function of the seat belt may be appropriately performed.

Meanwhile, the locked locking members 11 and 21 are configured to descend by automatically pressing the button B using a separate electrical device by a control of the controller 100. The belt-locking bar 40 moved to the first or second housing 10 or 20 needs to be automatically unlocked so as to be rotatable toward the other side by allowing the user to press a door opening button or releasing of the fixing of the belt-locking bar 40 by the control of the controller 100. Therefore, the belt-locking bar 40 is locked or unlocked by supplying current to the electromagnet (not shown) provided on a rear surface of the locking member 11 or 21 or blocking the supply of the current to the electromagnet so as to automatically press and unlock the button B.

When the pinion gear 42 rotates according to a forward rotation or reverse rotation of the driving motor 41, the belt-locking bar 40 is engaged with the semicircular toothed gear 12, such that the other end thereof rotates around the hinge portion 30. When the belt-locking bar 40 rotates as described above to be completely moved to any one of the first and second housings 10 and 20, thereby being locked by the locking member 11 or 21, an operation of the driving motor 41 stops.

Here, the controller 100 judges whether the belt-locking bar 40 contacts the sensor 81 or 82 and determines and controls whether or not the driving motor 41 stops according to the judgment result.

The belt-locking bar 40 moved into the first and second housings 10 or 20 as described above may further include a locking completing button (not shown) so as to be more accurately operated. Whether the belt-locking bar 40 is completely moved to the first or second housing 10 or 20 may be judged by sensing that the belt-locking bar 40 rotates to touch the locking completing button (not shown).

Meanwhile, in the case in which the belt-locking bar 40 rotates to thereby be positioned in the first housing 10, the chest and abdomen protecting belts 60 and 70 are led and extended from the retractor 50 accordingly. Then, in the case in which the belt-locking bar 40 rotates toward the second housing 20, the chest and abdomen protecting belts 60 and 70 are wound by the retractor 50 accordingly, such that the belts may maintain the tension so as to be tight. In addition, the chest and abdomen protecting belts 60 and 70 elastically fixes the body of the passenger sitting on the seat 1 while crossing the seat 1 in diagonal and horizontal directions, respectively.

Hereinafter, an application of the present invention will be described in more detail.

### <At the time of wearing seat belt>

When the passenger of the vehicle open and close the door, sits on a driver seat or a passenger seat, and starts a vehicle engine, a warning announcement and signal for the wearing of the seat belt are output through the recognizing device 90, and the locking member 11 of the first housing 10 is pressed by the electromagnet (not shown), such that the fixing of the belt-locking bar 40 is released, as shown in FIG. 2.

When the driving motor 41 is driven in a state in which the fixing of the belt-locking bar 40 is released, the pinion gear 42 rotates to allow the belt-locking bar 40 to descend, and the movable block 61 is transferred upwardly along the guide rail portion 45 in proportion to a rotation amount by which the belt-locking bar 40 descends, such that the chest protecting belt 60 diagonally crosses the seat 1.

When the belt-locking bar 40 rotates as described above to thereby be moved to the second housing 20, the button B of the locking member 21 of the second housing 20 is temporarily pressed while contacting the belt-locking bar 40, such that the belt-locking bar 40 passes through the button B and is locked in a state in which it is received in the second housing 20. When the belt-locking bar 40 received in the second housing 20 touches the locking completing button or the sensor 82 provided at the second housing 20 senses the belt-locking bar 40, a locking completing announcement and signal are output through the recognizing device 90. Therefore, the passenger may recognize whether or not the wearing of the seat belt starts and the wearing of the seat belt is completed.

When the belt-locking bar 40 completely descends to thereby be fixed to the second housing 20, the body of the passenger is elastically locked by the chest and abdomen protecting belts 60 and 70. Since this locking force is maintained through a physical device such as the locking member 21, the seat belt is not arbitrarily unlocked without a separate unlocking operation.

### <At the time of unlocking seat belt>

When the driving of the vehicle is completed or the passenger stalls the vehicle engine or operates the door opening button in order to get off the vehicle, a seat belt unlocking announcement and signal are output through the recognizing device 90 and at the same time, the controller 100 controls the locking member 21 of the second housing 20 to descend by the electromagnet. Therefore, the belt-locking bar 40 is unlocked, and the controller 100 operates the driving motor 41 to rotate the belt-locking bar 40 toward the first housing 10.

In addition, the movable block 61 is transferred downwardly along the guide rail portion 45 in proportion to the rotation of the belt-locking bar 40 to lock and pull the chest protecting belt 60, thereby increasing a space required for getting off the vehicle, and the belt-locking bar 40 is inserted into the first housing 10 and is locked by the locking member 11.

Here, the belt-locking bar 40 touches the locking completing button or the sensor 81 provided at the first housing 10 senses whether or not the belt-locking bar 40 approaches the sensor 81, such that an operation state of the belt-locking bar 40 is sensed. When it is sensed that the belt-locking bar 40 is locked, the controller 100 stops the operation of the driving motor 41 and outputs a seat belt unlocking completing announcement and signal through the recognizing device 90. Therefore, the passenger may recognize whether the unlocking of the seat belt is completed.

### <At the time of generation of malfunction>

When the belt-locking bar 40 collides with the body of the passenger or a factor hindering the wearing or unlocking of the seat belt occurs at the time of the wearing or unlocking of the seat belt, the controller 100 allows a corresponding fact to be recognized through the recognizing device 90 and is operated in a safe mode of returning the belt-locking bar 40 to a state before being operated.

As an example, the safe mode may be implemented in a scheme in which when an overload of a predetermined value or more is generated in the driving motor 41 rotating the belt-locking bar 40, the driving motor 41 is automatically controlled to rotate in a reverse direction to control the belt-locking bar 40 to be returned to a position before being operated. As another example, the safe mode may be implemented in a scheme in which sensing sensors are installed at both sides of the belt-locking bar 40, sense whether an obstacle such as the body of the passenger is present on a movement path of the belt-locking bar 40 at the time of the rotation of the belt-locking bar 40 in advance, and stops or returns the operation of the belt-locking bar 40 when the obstacle is sensed.

The apparatus for automatically locking and unlocking a vehicle seat belt according to the exemplary embodiment of the present invention is controlled so that an accident due to an automatic operation of the belt-locking bar 40 is not generated by this safe operating unit.

With the apparatus for automatically locking and unlocking a vehicle seat belt according to the exemplary embodiment operated as described above, the seat belt is automatically worn or unlocked when the passenger gets in/off the vehicle, thereby making it possible to significantly reduce an injury to a person due to non-wearing of the seat belt.

According to the exemplary embodiment of the present invention, a passenger or a driver getting in a vehicle is forced to wear the seat belt, thereby making it possible to significantly reduce an injury to a person due to non-wearing of the seat belt at the time of generation of a traffic accident.

## Claims

1. An apparatus for automatically locking and unlocking a vehicle seat belt arranged at a position adjacent to a door of a vehicle and coupled to a seat 1, the apparatus comprising:
a first housing 10 provided at an upper portion of a door;
a second housing 20 provided at a side portion of the door;
a belt-locking bar 40 having one end coupled to a hinge portion 30 provided at the center of a connection portion between the first and second housings 10 and 20, such that it rotates between the first and second housings 10 and 20 and including a guide rail portion 45 formed in a lengthwise direction;
a movable block 61 slidably coupled to the guide rail portion 45;
a retractor 50 installed at a side surface of the seat 1;
a chest protecting belt 60 having one end connected to the movable block 61 and the other end connected to the retractor 50 so as to be wound by the retractor 50;
an abdomen protecting belt 70 having one end connected to the belt-locking bar 40 and the other end connected to the retractor 50 so as to be wound by the retractor 50; and
a controller 100 for controlling the rotation of the belt-locking bar 40.

2. The apparatus of claim 1, wherein the first and second housings 10 and 20 are provided with locking members 11 and 21 locking and unlocking the belt-locking bar 40 received therein, respectively.

3. The apparatus of claim 2, wherein the locking members 11 and 21 include hinges P each provided at the first and second housings 10 and 20, buttons B having one end coupled to the hinges P to lock or unlock the belt-locking bar 40 by a rotation, springs S provided between the buttons B and the first and second housings 10 and 20 to elastically support the buttons B, and ascending preventing jaws R protrudedly formed at free end sides of the buttons B, the ascending preventing jaws R being caught by the first and second housings 10 and 20 to limit the rotation of the buttons B.

4. The apparatus of claim 3, wherein the button B is temporally pressed by a contact with the belt-locking bar 40 to lock the belt-locking bar 40 and is automatically opened by a control of the controller 100 to unlock the belt-locking bar 40.

5. The apparatus of claim 1, wherein the first and second housings 10 and 20 are provided with sensors 81 and 82 sensing whether they receive the belt-locking bar 40 therein, respectively.

6. The apparatus of claim 1, further comprising a driving motor 41 rotating the belt-locking bar 40, wherein the controller 100 controls an operation of the driving motor 41 by on/off operations of a start.

7. The apparatus of claim 1, wherein the controller 100 controls the belt-locking bar 40 to be automatically returned to a position before being operated when resistance is generated during the rotation of the belt-locking bar 40.

8. The apparatus of claim 1, further comprising a recognizing device 90 warning an operation state of the belt-locking bar 40 at the time of an operation of the belt-locking bar 40.
